# EUROPÄISCHE PATENTSCHRIFT

(11) **EP 3 011 103 B1**
(45) Veröffentlichungstag und Bekanntmachung des Hinweises auf die Patenterteilung: **16.08.2023**
(21) Anmeldenummer: 14723774.7
(22) Anmeldetag: 12.05.2014
(51) Int. Cl.: D21F 7/08, D21F 1/00, D21F 7/10

(54) **BESPANNUNG UND VERFAHREN ZU IHRER HERSTELLUNG**
FABRIC AND METHOD FOR THE PRODUCTION THEREOF
ENTOILAGE ET SON PROCÉDÉ DE FABRICATION

(30) Priorität: 21.06.2013 DE 102013211786
(43) Veröffentlichungstag der Anmeldung: 27.04.2016
(73) Patentinhaber: Voith Patent GmbH, 89522 Heidenheim (DE)
(72) Erfinder: KÖCKRITZ, Uwe, 89522 Heidenheim (DE); WALKENHAUS, Hubert, 50169 Kerpen (DE); EINARSSON, Johan, 702 25 Örebro (SE); MALMQUIST, Johan, S-641 36 Katrineholm (SE)
(74) Vertreter: Voith Patent GmbH - Patentabteilung
(86) Internationale Anmeldenummer: PCT/EP2014/059605
(87) Internationale Veröffentlichungsnummer: WO 2014/202281

(56) Entgegenhaltungen:
- EP-A1- 2 128 335
- DE-A1-102011 007 291
- US-A- 4 842 905

## Beschreibung

Die Erfindung betrifft eine Bespannung insbesondere zur Verwendung in der Pressenpartie einer Maschine zur Herstellung einer Faserbahn wie einer Papier-, Karton- oder Tissuebahn sowie ein Verfahren zur Herstellung einer derartigen Bespannung.

Bespannungen sind in einer Vielzahl von Formen in einer Papiermaschine zu finden. Je nach Position kommen den Bespannungen unterschiedliche Aufgaben zu, die neben der Unterstützung und Führung der Papierbahn insbesondere der Entwässerung dienen. Das in der Papierbahn bei fortschreitendem Durchlaufen der Maschine in abnehmendem Maß vorhandene Wasser muss in geeigneter Form abgeführt werden, ohne dass die Papierbahn dabei beschädigt wird oder Markierungen durch mechanische oder hydraulische Vorgänge bei der Entwässerung erleidet.

Insbesondere in der Pressenpartie ist die schonende Entwässerung von zentraler Bedeutung, da hier bereits die Weichen für die Glättung der Papierbahn gestellt werden. Nach der Initialentwässerung in der Formierpartie ist die Papierbahn noch nicht trocken genug, um in freien Zügen durch die Maschine zu laufen, sondern wird gewöhnlich je nach Konstellation auf zumindest einem oder zwischen zwei Filzen geführt und gepresst.

Entsprechend sind die Anforderungen an entsprechende Pressfilze in Bezug auf die Qualität der Oberfläche, das Wasseraufnahme- und -wiederabgabevermögen und die Durchlässigkeit für Luft und Wasser sehr hoch.

Pressfilze weisen heute gängigerweise eine lastaufnehmende Grundstruktur, eine oder mehrere zusätzliche Lagen zur Verstärkung oder zur Verbesserung der oben genannten Eigenschaften sowie eine oder mehrere Lagen von Stapelfasern auf. Die letzteren stellen einen Engpass in der Produktion dar, da die Stapelfaserlagen einerseits zahlreich sein können und andererseits einen mehrstufigen und teilweise arbeitsintensiven Herstellungsprozess durchlaufen, ehe sie mit der Grundstruktur verbunden werden. Diese Verbindung erfolgt über eine Vernadelung, bei welcher eine Nadelmatrix auf die auf der Grundstruktur aufliegende Stapelfaserlage einwirkt und die einzelnen Fasern in die Grundstruktur hinein- und durch diese hindurchzieht und dadurch eine feste Verbindung zwischen Grundstruktur und Stapelfaserlagen ermöglicht.

Heutige Maschinen zur Herstellung von Papier oder Karton weisen oft eine große Arbeitsbreite auf, die bis zu 11m betragen kann. Es ist daher ersichtlich, dass die Bespannungen eine ebensolche Breite aufweisen müssen. Die Herstellung der Bespannungen wird jedoch in diesen Dimensionen immer aufwendiger und teurer. Neben der Breite der Webmaschinen sind dabei die Breite der Nadelmaschinen und somit die hohen Investitionskosten ein die Produktion begrenzender Faktor.

Es liegt somit im Interesse der Papiermaschinenbetreiber und der Bespannungsindustrie, Lösungen zu suchen, Bespannungen in einfacherer und kostengünstigerer Weise und trotzdem in beliebiger Dimension herzustellen.

Verschiedene Ansätze hierzu sind bereits vor längerer Zeit entwickelt worden.

In der Schrift EP 2 128 335 A1 ist eine Bespannung und ein Verfahren zu ihrer Herstellung beschrieben.

Es ist beispielsweise aus der DE102011007291A1 und aus der DE102008000915A1 bekannt, eine Verstärkungslage aus einem Gewirke oder einem anderen nicht gewobenen flächigen Textil quer zur Maschinenrichtung auf eine Grundstruktur aufzubringen und die einzelnen Teile aneinander anzustückeln, bis die volle Länge der Grundstruktur bedeckt ist. Die letztere ist dabei jedoch in gewohnter Weise in voller Länge und Breite der Bespannung ausgebildet.

Nachteilig hierbei ist insbesondere, dass die Verstärkungslage nicht allein verwendbar ist, da sie nicht genug Stabilität bietet, sondern nur in Verbindung mit einer Grundstruktur. Zudem sind die Garne nicht gecrimped bzw. gewellt sind, so dass ein Auflösen der Struktur während der Verwendung der Bespannung zu befürchten ist.

Aus der EP1209283B1 ist eine Bespannung bekannt, welche in Querrichtung gesehen mehrere sich in Längsrichtung parallel zueinander erstreckende und nebeneinander angeordnete Teilbahnen aufweist, deren Seitenränder über Verbindungsmittel verbunden sind. Benachbarte Seitenränder haben dabei einen mäanderartigen Verlauf mit sich abwechselnden Vorsprüngen und Ausnehmungen. Die Teilbahnen sind über die Vorsprünge und Ausnehmungen miteinander verzahnt.

Nachteilig an diesem Stand der Technik ist dabei insbesondere in der Länge der Verbindungsbereiche zu sehen, welche sich aufgrund der spiraligen Wicklung der Teilbahnen über ein Vielfaches der Länge der Papiermaschinenbespannung erstreckt. Die Herstellung eines solchen Filzes ist höchst aufwendig sowohl in Bezug auf den Zeitfaktor als auch in Bezug auf die Handhabung. Zudem besteht bei Erstreckung von Nahtbereichen in Maschinenlängsrichtung stets die Gefahr, dass diese sich unter Lastaufnahme unterschiedlich stark längen und der Filz somit beschädigt wird, was in erhöhter Markierungsneigung sowie in Fehlfunktionen bis zu Filzrissen mit Gefährdung des Bedienpersonals und Beschädigung nachfolgender Maschinenteile resultieren kann.

Des Weiteren ist aus der US 4,842,905 eine Papiermaschinenbespannung bekannt, welche aus einzelnen Paneelen hergestellt wird, die puzzleteilartig Vorsprünge und Ausnehmungen aufweisen und zusammengefügt werden können. Die Paneele können dabei extrudiert, ausgestanzt, laminiert oder in ähnlichen geeigneten Verfahren hergestellt werden.

Nachteilig an diesem Stand der Technik ist die komplexe Herstellung, die viele Schritte erfordert. Des Weiteren ist die Haltbarkeit der Verbindungen fraglich, wenn auf eine lange Kante nur ein kleiner Vorsprung zur Verfügung steht. Mehrere Vorsprünge sind wiederum mit erhöhtem Herstellungsaufwand der Einzelpaneele verbunden. Generell ist es schwierig, eine Naht herzustellen, welche markierungsfrei und bei ausreichender Stabilität arbeitet. Der Aufbau der vorstehend genannten Bespannung weist Nähte bzw. Verbindungen in mehreren Richtungen - Maschinenrichtung und Maschinenquerrichtung - auf, was die Markierungsneigung noch erhöht. Die Kreuzungspunkte der Nähte stellen dabei besondere Schwachpunkte dar, sowohl in Bezug auf die Stabilität als auch in Bezug auf die Markierungsneigung.

Es ist somit Aufgabe der Erfindung, eine Bespannung anzugeben, welche die genannten Nachteile des Standes der Technik vermeidet und bei welcher die Grundstruktur in einerseits einfacher und kostengünstiger und in andererseits zuverlässiger und qualitativ hochwertiger Weise herstellbar ist.

Die Aufgabe wird hinsichtlich der Bespannung gelöst durch die Merkmale des Anspruchs 12 sowie hinsichtlich des Verfahrens durch die Merkmale des Anspruchs 1.

Erfindungsgemäß ist dabei vorgesehen, dass die Bespannung aus mehreren Streifen zusammengesetzt ist, welche in Form von Flächengebilden mit einem Anteil der Grundstruktur und einem Anteil der zumindest einen Stapelfaserlage vorliegen, wobei die Streifen an zwei einander gegenüberliegenden Kanten Nahtschlaufen aufweisen, welche jeweils mit Nahtschlaufen der Kanten benachbarter Streifen verbunden sind, und wobei die Kanten mit den Nahtschlaufen in einer Quermaschinenrichtung der Bespannung orientiert sind.

Dadurch ist es möglich, ein nahezu unbegrenztes Dimensionsspektrum hinsichtlich der Länge und Breite einer Bespannung abzudecken, ohne dafür einen umfangreichen Maschinenpark mit breiten Web- und Nadelmaschinen bereitstellen zu müssen. Die so erzeugten Bespannungen sind somit in sehr kostengünstiger Weise herstellbar und zudem für nahezu jede Papier-, Karton- oder Tissuemaschine in der passenden Breite und Länge konfektionierbar.

Das erfindungsgemäße Verfahren zum Herstellen einer Bespannung insbesondere zur Verwendung in einer Pressenpartie einer Maschine zur Herstellung einer Faserbahn wie einer Papier-, Karton- oder Tissuebahn, umfasst dabei die folgenden Verfahrensschritte: i) Herstellen einer Grundstruktur in beliebiger Breite, wobei die Grundstruktur (3) Kanten mit lateralen Nahtschlaufen aufweist ii) Konvertieren der Grundstruktur zu Rollenware; iii) Aufbringen von zumindest einer Stapelfaserlage und Vernadeln mit der Grundstruktur; iv) Konfektionieren der Rollenware zu Streifen; v) Drehen der Streifen um 90° so dass die Kanten mit lateralen Nahtschlaufen in einer Quermaschinenrichtung verlaufender Bespannung orientiert sind; und vi) Verbinden der Streifen (2) zu einer Bespannung.

Weitere vorteilhafte Aspekte und Weiterbildungen der Erfindung gehen aus den Unteransprüchen hervor.

Bevorzugt kann vorgesehen sein, dass mehrere Stapelfaserlagen vorgesehen sind, die unterschiedliche Flächengewichte und/oder unterschiedliche Faserstärken aufweisen. Dadurch können die physikalischen Eigenschaften der Bespannung an die jeweilige Position angepasst und das Entwässerungsverhalten optimiert werden.

Vorteilhafterweise kann die Grundstruktur aus einer Vielzahl von Möglichkeiten gewählt sein: flach gewebte Struktur mit gewebten Nahtschlaufen an Kanten; flach gewebte Struktur, die zu einem schlauchartigen Endlosband vereinigt und flachgelegt ist, um Nahtschlaufen an ihren Kanten auszubilden; rundgewebte Struktur, die flachgelegt ist, um Nahtschlaufen an ihren Kanten auszubilden; spiralgewickelte Struktur, die durch spiraliges Wickeln schmaler Bandware überlappend oder auf Stoß erzeugt und flachgelegt ist, um Nahtschlaufen an ihren Enden auszubilden; spiralisiertes Fadengelege mit Faservlies, flachgelegt, um Nahtschlaufen zu bilden; Spiralstruktur, die aus ineinandergreifend abgelegten und mittels Steckdrähten zu einem Flächengebilde verbundenen Kunststoffwendeln, wobei kantenständige Wendeln Nahtschlaufen bilden.

Gemäß einer vorteilhaften Ausführungsform kann vorgesehen sein, dass eine oder mehrere Funktionslagen auf der Grundstruktur und/oder auf der zumindest einen Stapelfaserlage und/oder zwischen Stapelfaserlagen und/oder auf der obersten Stapelfaserlage als Decklage angeordnet ist. Dies ermöglicht eine weitere Verbesserung und Verfeinerung der Entwässerung z.B. in Bezug auf die Rewetting-Eigenschaften der Bespannung.

Die eine oder mehrere Funktionslagen können ausgewählt sein aus: Filme, Folien, Gelege, Gestricke, Gewirke.

Bevorzugt kann die Verbindung der Streifen mittels Steckdrähten durch die Nahtschlaufen oder durch Einbringung eines thermoplastischen Materials oder eines Klebers, insbesondere eines Zwei-Komponenten-Epoxyd- oder Acrylharzes, erfolgen.

Gemäß Aspekten der Erfindung können die Verfahrensschritte i), ii), iii) und v) zusätzlich einen anschließenden Schritt der Thermofixierung umfassen, um die Struktur zu begradigen und zu stabilisieren.

Der Verfahrensschritt ii) kann folgende Teilschritte aufweisen: a) Schließen der lateralen Nahtschlaufen der Grundstruktur durch Befestigen jeweils eines zusätzlichen Gewebestreifens; b) Aufrollen der mit den zusätzlichen Gewebestreifen versehenen Grundstruktur.

Der Verfahrensschritt kann iii) die folgenden Teilschritte umfassen: a) Aufbringen von einer oder mehreren Lagen von Stapelfasern mit unterschiedlichen Faserdurchmessern und Flächengewichten in einem oder mehreren Schritten auf die Rollenware; b) Fixieren der Stapelfaserlage auf der Grundstruktur durch Vernadeln; c) ggf. Wiederholen des Schrittes b).

Bevorzugt kann eine Vernadelungsdichte von ca. 500 bis 1500 Stichen pro cm² vorgesehen sein, um eine gute Anbindung der Stapelfaserlagen an die Grundstruktur zu gewährleisten.

Gemäß einer vorteilhaften Weiterbildung der Erfindung kann vorgesehen sein, dass der Verfahrensschritt iii) zusätzlich das Einbringen von einer oder mehreren Funktionslagen umfasst.

Der Verfahrensschritt iv) kann die folgenden Teilschritte umfassen: a) Schneiden der Rollenware entsprechend der gewünschten Breite der Bespannung; b) Schlitzen der Stapelfaserlagen zum Herstellen von Nahtklappen an den Kanten; c) Öffnen der Nähte zwischen der Grundstruktur und den zusätzlichen Gewebestreifen durch Entfernen des Steckdrahtes; d) Trennen der Streifen voneinander.

Die Erfindung wird nachfolgend ohne Beschränkung der Allgemeinheit anhand bevorzugter Ausführungsbeispiele näher beschrieben. In den Figuren zeigen:
- Fig. 1: eine stark schematisierte Ansicht einer erfindungsgemäß ausgebildeten Bespannung aus einzelnen Streifen,
- Fig. 2: eine schematisierte Ansicht eines einzelnen Streifens der Grundstruktur einer erfindungsgemäß ausgebildeten Bespannung, und
- Fig. 3: eine stark schematisierte Querschnittsansicht der als Rollenware konfektionierten Grundstruktur mit seitlichen Hilfsstreifen.

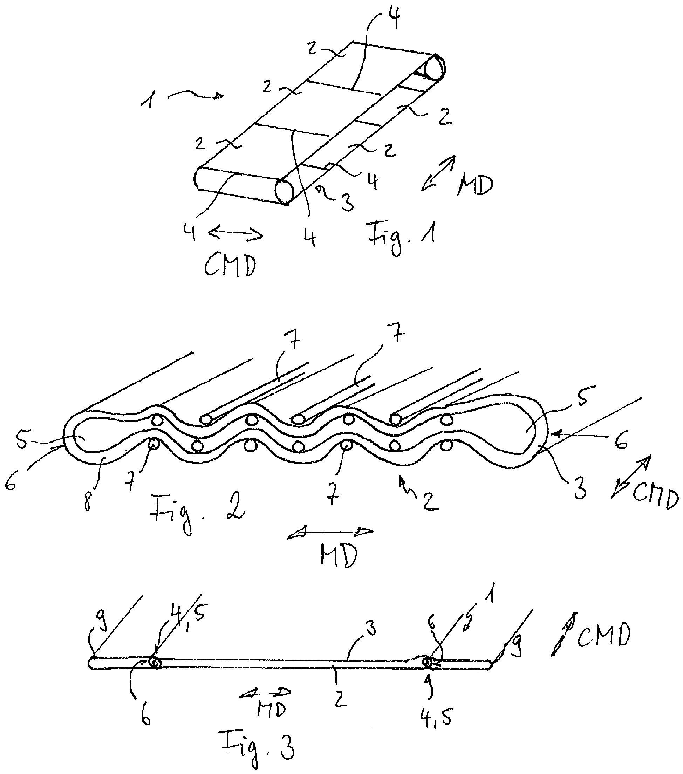

In Figur 1 ist zur besseren Verständlichkeit der Erfindung zunächst eine stark schematisierte Prinzipskizze einer fertigen Bespannung 1 dargestellt, die gemäß der Erfindung ausgebildet ist. Es ist zu bemerken, dass hier aus Gründen der Übersichtlichkeit nur eine Grundstruktur 3 ohne weitere zusätzliche Komponenten dargestellt ist.

Die Bespannung 1 weist dabei mehrere Streifen 2 auf, welche nebeneinander in einer Maschinenquerrichtung - im Folgenden als CMD bezeichnet - angeordnet und miteinander verbunden sind. Die einzelnen Streifen 2 sind über Nahtbereiche 4 miteinander verbunden.

In Figur 2 ist einer schematisierten Ansicht ein einzelner Streifen 2 der Grundstruktur 3 dargestellt. Die Grundstruktur 3 kann dabei auf verschiedene Weise ausgeführt bzw. hergestellt werden. Einerseits ist eine flach gewebte Struktur mit gewebten Nahtschlaufen 5 an lateralen Kanten 6 möglich. Derartige Strukturen können in großen Breiten auf gängigen Webmaschinen hergestellt werden.

Des Weiteren ist es möglich und denkbar, flach gewebte Strukturen, die zu einem schlauchförmigen Endlosband vereinigt worden sind, oder rundgewebte Strukturen zu verwenden, die jeweils flachgelegt werden, um Nahtschlaufen 5 an ihren Kanten 6 auszubilden. In Figur 2 ist dabei eine rundgewebte Struktur, die anschließend flachgelegt wurde, beispielhaft dargestellt. Die Struktur weist einander kreuzende Längsfäden 7 und Querfäden 8 auf, die in bekannter Weise miteinander verwoben sind und ein Flächengebilde bilden. Die Längs- und/oder Querfäden 7, 8 sind dabei vorzugsweise gekröpft, was durch eine geeignete Wärmebehandlung erzielbar ist, und unterliegen dadurch weniger der Gefahr des Auswanderns der Fäden.

Eine weitere Möglichkeit besteht darin, spiralgewickelte Strukturen, die durch spiraliges Wickeln einer schmalen Bandware beispielsweise über zwei voneinander beabstandete Walzen überlappend oder auf Stoß erzeugt wird, ebenfalls flachzulegen, um Nahtschlaufen 5 an Kanten 6 auszubilden. Eine ähnliche Ausführung mit einer Fadenschar und einem Vlies, die gemeinsam gewickelt werden, ist denkbar. Hierbei wird ein Obergewebe als Rollenware hinzugefügt. Auch hier wird die gewickelte Struktur doppelt abgelegt bzw. flachgelegt.

Auch Spiralstrukturen, die aus Kunststoffwendeln bestehen, sind eine geeignete Alternative für die Grundstruktur 3. Hierbei werden die Kunststoffwendeln ineinandergreifend nebeneinander abgelegt und die einzelnen Wendeln mittels Steckdrähten zu einem Flächengebilde verbunden. Hier können kantenständige Wendeln jeweils als Nahtschlaufen 5 dienen. Es können in den Wendeln Fülldrähte aus PA vorgesehen sein. Die Spiralstruktur wird dabei als Rollenware und so konfektioniert, dass die Wendeln in Maschinenrichtung der späteren fertigen Bespannung orientiert sind.

Das Konzept der erfindungsgemäß ausgebildeten Bespannung 1 basiert darauf, den endgültigen Pressfilz aus vorkonfektionierter Rollenware herzustellen, wobei die Rollenware in die o.g. Streifen 2 verarbeitet wird, die dann entsprechend orientiert, miteinander verbunden und abschließend thermofixiert werden, wie im Folgenden näher beschrieben.

In einem ersten Schritt wird die Grundstruktur 3 hergestellt. Diese kann, wie weiter oben bereits ausgeführt, als flaches oder rundgewebtes Gewebe, Spiralstruktur oder aufspiralisiertes Gelege ausgeführt sein. Die Grundstruktur 3 wird flachgelegt oder ist bereits flachgewebt. Nach der Herstellung der Grundstruktur 3 in einer beliebigen Breite ist eine Textilbahn vorhanden, die an zwei einander gegenüberliegenden Kanten 6 Nahtschlaufen 5 aufweist. Die Kanten 6 mit den Nahtschlaufen 5 sind dabei die längeren Kanten der Grundstruktur 3.

Bevorzugtes Material für die Grundstruktur 3 ist Polyamid, es sind jedoch auch andere gängige Materialien wie PPS, PA, PET, CoPA u.a. möglich und denkbar. Die Längs- und Querfäden 7, 8 können als Monofilamente, Multifilamente oder verzwirnte Garne vorliegen.

Wenn nötig, kann nach dem Flachlegen eine erste Thermofixierung erfolgen, um eine stabile Grundstruktur 3 und stabile Nahtschlaufen 5 zu erzeugen.

Im nächsten Verfahrensschritt erfolgt die Vorbereitung der Grundstruktur 3 als Rollenware. Dabei werden zunächst die Nahtschlaufen 5 der Grundstruktur 3 durch Befestigung jeweils eines zusätzlichen schmaleren Gewebestreifens 9 geschlossen, wodurch die Rollenware das Aussehen gemäß Fig. 3 annimmt.

Betrachtet man Fig. 3, so ist ersichtlich, dass die flachgelegte oder flachgewobene Grundstruktur 3 beidseits mit den Gewebestreifen 9 versehen ist. Diese sind ebenfalls mit Nahtschlaufen versehen und dienen einerseits der leichteren Handhabbarkeit des gesamten Gebildes, da sich die Nahtschlaufen 5 beim Aufrollen sonst verhaken könnten, sowie andererseits auch dem Schutz der Nahtschlaufen 5, welche sonst möglicherweise durch das Verhaken oder auch im nachfolgenden Schritt des Vernadelns beschädigt werden könnten. Die miteinander verbundenen Gewebestreifen 9 und Grundstruktur 3 werden sodann aufgerollt und stehen für den nächsten Schritt zur Verfügung.

Auch hier kann, wenn nötig, eine Thermofixierung erfolgen, um eine ebene Grundstruktur 3 für den nächsten Verfahrensschritt zu gewährleisten.

Im nächsten Verfahrensschritt werden eine oder mehrere Lagen von Stapelfasern, die in unterschiedlichen Faserdurchmessern und Flächengewichten vorliegen können, in einem oder mehreren Schritten auf der Rollenware angeordnet und fixiert. Die Fasern der Stapelfaserlagen können dabei aus PA, PET, PAc oder Bikomponenten-Material ausgewählt sein. Ferner kann die Orientierung der Fasern in den Stapelfaserlagen variieren. Gewöhnlich sind die Fasern in Quermaschinenrichtung der fertigen Bespannung orientiert. Die Orientierung kann somit nicht zur Überbrückung des Nahtbereiches dienen. Es kann jedoch vorgesehen sein, die Faserorientierung in Maschinenrichtung der fertigen Bespannung zu drehen, so dass eine gewisse Überbrückung des Nahtbereiches möglich ist.

Aus Gründen der Übersichtlichkeit sind in den Figuren 1 bis 3 keine derartigen Lagen dargestellt. Da das Aufbringen und Vernadeln von Stapelfaserlagen auf einer Grundstruktur 3 Stand der Technik darstellt, kann auf eine ausführliche Beschreibung auch verzichtet werden. Es werden lediglich die für das erfindungsgemäße Verfahren wesentlichen Komponenten näher erläutert.

Bevorzugt wird eine Stapelfaserlage nach der anderen separat auf die Grundstruktur gebracht. Dies erfordert einen mehrfachen Vernadelungsprozess von Rolle zu Rolle. Nach jedem Verfahrensschritt wird die Rollenware zum Anfang der Vernadelungsstrecke zurücktransportiert, um den nächsten Vernadelungsvorgang durchzuführen.

Zwischen den einzelnen Stapelfaserlagen können weitere Lagen eingelegt werden, beispielsweise PU-Folien oder -Gewebe.

Alternativ ist es auch denkbar, verschiedene Stapelfaserlagen zunächst in eine Lage zu vereinen und diese in einem einzelnen Verfahrensschritt auf die Grundstruktur 3 aufzubringen und in einem einzelnen Vernadelungsprozess mit der Grundstruktur 3 zu vernadeln. Schlussendlich sollte eine Vernadelungsdichte von ca. 500 bis 1500 Stichen pro cm² erzielt werden, um eine gute Verankerung der Fasern der Stapelfaserlagen in der Grundstruktur 3 zu gewährleisten.

Dabei wird aus Gründen der Vereinfachung des Verfahrens stets die gesamte Breite der Rollenware einschließlich der seitlichen Gewebestreifen 9 mit Stapelfaserlagen bedeckt und vernadelt.

In einem abschließenden Schritt kann es möglicherweise notwendig sein, eine weitere Lage als Decklage, wie z.B. ein weiteres Gewebe, Gelege, Gewirke, eine Membran oder eine Folie, auf die Rollenware aufzubringen.

Es kann notwendig sein, die Rollenware einer Thermofixierung zu unterziehen, um eine dimensionsstabile Stapelfaserlage herzustellen, bevor die Rollenware weiteren Bearbeitungsschritten unterzogen wird.

Im nächsten Verfahrensschritt erfolgt die Konvertierung der Rollenware in einzelne Streifen und das Zusammensetzen der späteren Bespannung 1.

Die Rollenware wird quer zu Erstreckung der Kanten 6 mit den Nahtschlaufen 5 entsprechend der Breite der zu produzierenden Bespannung zuzüglich einer Bearbeitungszugabe geschnitten. Danach wird eine Nahtklappe an den beiden Kanten 6 vorbereitet, die mit den zusätzlichen Gewebestreifen 9 versehen sind. Die Nahtklappe wird durch einen Schnitt durch die Stapelfaserlagen bis zur Grundstruktur 3 erzeugt, wobei darauf zu achten ist, diese sowie die Nahtschlaufen 5 nicht zu beschädigen.

Die beiden Nähte zu den zusätzlichen Gewebestreifen 9 werden geöffnet, indem der Steckdraht herausgezogen wird. Die Gewebestreifen 9 werden vorsichtig vom Streifen 2 getrennt.

Danach werden die Streifen 2, welche nun an zwei Kanten 6 offene Nahtschlaufen 5 aufweisen, um 90° gedreht und in Maschinenquerrichtung mit dem nächsten Streifen 2 verbunden. Durch Wiederholung dieses Schrittes kann eine Bespannung 1, insbesondere ein Pressfilz in beliebiger Größe (Länge, Breite) hergestellt werden. Die Verbindung der Streifen 2 untereinander kann durch die übliche Verbindung mittels Steckdrähten erfolgen. Es kann auch thermoplastisches Material oder ein Kleber wie ein Zwei-Komponenten-Epoxyd- oder -Acrylharz eingebracht werden, um eine Klebeverbindung in der Nahtzone zu erzeugen. Hierbei werden insbesondere die Stapelfasern an der Grundstruktur fixiert.

Abschließend kann wiederum eine Thermofixierung bei hoher Temperatur und Spannung notwendig sein, um strukturelle Unregelmäßigkeiten zu überwinden.

Das beschriebene Verfahren ist nicht auf die Herstellung von Pressfilzen begrenzt, es können in dieser Weise auch andere Bespannungen wie beispielsweise Trockensiebe hergestellt werden.

## Patentansprüche

1. Verfahren zum Herstellen einer Bespannung insbesondere zur Verwendung in einer Pressenpartie einer Maschine zur Herstellung einer Faserbahn wie einer Papier-, Karton- oder Tissuebahn, umfassend die Verfahrensschritte: i) Herstellen einer Grundstruktur (3) in beliebiger Breite; wobei die Grundstruktur (3) Kanten mit lateralen Nahtschlaufen aufweist ii) Konvertieren der Grundstruktur zu Rollenware; iii) Aufbringen von zumindest einer Stapelfaserlage und Vernadeln mit der Grundstruktur (3); iv) Konfektionieren der Rollenware zu Streifen (2); v) Drehen der Streifen um 90°, so dass die Kanten mit lateralen Nahtschlaufen in einer Quermaschinenrichtung der Bespannung orientiert sind; und vi) Verbinden der Streifen (2) zu einer Bespannung (1), wobei die Verbindung insbesondere mittels Steckdrähten erfolgen kann.

2. Verfahren nach Anspruch 1, wobei der Verfahrensschritt i) zusätzlich einen anschließenden Schritt der Thermofixierung umfasst.

3. Verfahren nach Anspruch 1 oder 2, wobei der Verfahrensschritt ii) folgende Teilschritte aufweist: a) Schließen von lateralen Nahtschlaufen der Grundstruktur (3) durch Befestigen jeweils eines zusätzlichen Gewebestreifens; b) Aufrollen der mit den zusätzlichen Gewebestreifen versehenen Grundstruktur (3).

4. Verfahren nach einem der Ansprüche 1 bis 3, wobei der Verfahrensschritt ii) zusätzlich einen anschließenden Schritt der Thermofixierung umfasst.

5. Verfahren nach einem der Ansprüche 1 bis 4, wobei der Verfahrensschritt iii) die folgenden Teilschritte umfasst: a) Aufbringen von einer oder mehreren Lagen von Stapelfasern mit unterschiedlichen Faserdurchmessern und Flächengewichten in einem oder mehreren Schritten auf die Rollenware; b) Fixieren der Stapelfaserlage auf der Grundstruktur durch Vernadeln; c) ggf. Wiederholen des Schrittes b).

6. Verfahren nach Anspruch 5, wobei eine Vernadelungsdichte von ca. 500 bis 1500 Stichen pro cm² vorgesehen ist.

7. Verfahren nach einem der Ansprüche 1 bis 5, wobei der Verfahrensschritt iii) zusätzlich das Einbringen von einer oder mehreren Funktionslagen umfasst.

8. Verfahren nach einem der Ansprüche 1 bis 6, wobei der Verfahrensschritt iii) zusätzlich einen anschließenden Schritt der Thermofixierung umfasst.

9. Verfahren nach einem der Ansprüche 1 bis 8, wobei der Verfahrensschritt iv) die folgenden Teilschritte umfasst: a) Schneiden der Rollenware entsprechend der gewünschten Breite der Bespannung (1); b) Schlitzen der Stapelfaserlagen zum Herstellen von Nahtklappen an den Kanten; c) Öffnen der Nähte zwischen der Grundstruktur und den zusätzlichen Gewebestreifen durch Entfernen des Steckdrahtes; d) Trennen der Streifen (2) voneinander.

10. Verfahren nach einem der Ansprüche 1 bis 9, wobei der Verfahrensschritt v) zusätzlich einen anschließenden Schritt der Thermofixierung umfasst.

11. Verfahren nach einem der Ansprüche 1 bis 10, wobei thermoplastisches Material oder ein Kleber, insbesondere ein Zwei-Komponenten-Epoxyd- oder Acrylharz eingebracht werden, um eine Klebeverbindung in der Nahtzone zu erzeugen.

12. Bespannung (1) insbesondere zur Verwendung in einer Pressenpartie einer Maschine zur Herstellung einer Faserbahn wie einer Papier-, Karton- oder Tissuebahn, umfassend eine Grundstruktur (3) und zumindest eine auf der Grundstruktur (3) angeordnete und mit dieser verbundene Stapelfaserlage, **dadurch gekennzeichnet, dass** die Herstellung der Bespannung (1) ein Verfahren gemäß einem der Ansprüche 1 bis 11 umfasst.

13. Bespannung nach Anspruch 12, **dadurch gekennzeichnet, dass** mehrere Stapelfaserlagen vorgesehen sind, die unterschiedliche Flächengewichte und/oder unterschiedliche Faserstärken aufweisen.

14. Bespannung nach einem der Ansprüche 12 oder 13, **dadurch gekennzeichnet, dass** die Grundstruktur (3) ausgewählt ist aus: flach gewebte Struktur mit gewebten Nahtschlaufen (5) an Kanten (6); flach gewebte Struktur, die zu einem Endlosband vereinigt und flachgelegt ist, um Nahtschlaufen (5) an ihren Kanten (6) auszubilden; rundgewebte Struktur, die flachgelegt ist, um Nahtschlaufen (5) an ihren Kanten auszubilden; spiralgewickelte Struktur, die durch spiraliges Wickeln schmaler Bandware überlappend oder auf Stoß erzeugt und flachgelegt ist, um Nahtschlaufen (5) an ihren Enden auszubilden; spiralisiertes Fadengelege mit Faservlies, flachgelegt, um Nahtschlaufen (5) zu bilden; Spiralstruktur aus ineinandergreifend abgelegten und mittels Steckdrähten zu einem Flächengebilde verbundenen Kunststoffwendeln, wobei kantenständige Wendeln Nahtschlaufen (5) bilden.

15. Bespannung nach einem der Ansprüche 12 bis 14, **dadurch gekennzeichnet, dass** eine oder mehrere Funktionslagen auf der Grundstruktur (3) und/oder auf der zumindest einen Stapelfaserlage und/oder zwischen Stapelfaserlagen und/oder auf der obersten Stapelfaserlage als Decklage angeordnet ist.

## Claims

1. A method of producing a covering, in particular for use in a press section of a machine for producing a fibrous web such as a paper, board or tissue web, comprising the method steps: i) producing a base structure (3) of any width; the base structure (3) having edges with lateral seam loops ii) converting the base structure into rolled material; iii) applying at least one staple fibre layer and needling it to the base structure (3); iv) converting the roll material into strips (2); v) rotating the strips by 90° so that the edges with lateral seam loops are oriented in a transverse machine direction of the covering; and vi) connecting the strips (2) to form a covering (1), wherein the connection can be made in particular by means of plug wires.

2. Method according to claim 1, **characterised in that** method step i) additionally comprises a subsequent step of heat-setting.

3. Method according to claim 1 or 2, **characterised in that** the method step ii) comprises the following sub-steps: a) closing lateral seam loops of the basic structure (3) by fastening one additional fabric strip each; b) rolling up the basic structure (3) provided with the additional fabric strips.

4. A process according to any one of claims 1 to 3, **characterised in that** the process step ii) additionally comprises a subsequent step of heat-setting.

5. A method according to any one of claims 1 to 4, **characterised in that** method step iii) comprises the following sub-steps: a) applying one or more layers of staple fibres with different fibre diameters and basis weights in one or more steps to the roll material; b) fixing the staple fibre layer to the base structure by needling; c) optionally repeating step b).

6. Method according to claim 5, **characterised in that** a needling density of approx. 500 to 1500 stitches per cm² is provided.

7. A method according to any one of claims 1 to 5, **characterised in that** method step iii) additionally comprises the introduction of one or more functional layers.

8. A method according to any one of claims 1 to 6, **characterised in that** the method step iii) additionally comprises a subsequent step of heat-setting.

9. A method according to any one of claims 1 to 8, **characterised in that the** method step iv) comprises the following sub-steps: a) cutting the roll fabric according to the desired width of the covering (1); b) slitting the staple fibre layers to produce seam flaps at the edges; c) opening the seams between the basic structure and the additional fabric strips by removing the plug wire; d) separating the strips (2) from each other.

10. A method according to any one of claims 1 to 9, **characterised in that** the method step v) additionally comprises a subsequent step of heat-setting.

11. A method according to any one of claims 1 to 10, **characterised in that** thermoplastic material or an adhesive, in particular a two-component epoxy or acrylic resin, is introduced to create an adhesive bond in the seam zone.

12. A clothing (1), in particular for use in a press section of a machine for producing a fibrous web such as a paper, board or tissue web, comprising a base structure (3) and at least one staple fibre layer arranged on and connected to the base structure (3), **characterized in that** the production of the clothing (1) comprises a process according to one of claims 1 to 11.

13. The fabric according to claim 12, **characterised in that** several staple fibre layers are provided, which have different weights per unit area and/or different fibre thicknesses.

14. A fabric according to any one of claims 12 or 13, **characterised in that** the base structure (3) is selected from: flat woven structure having woven seam loops (5) at edges (6); flat woven structure united into a continuous band and laid flat to form seam loops (5) at its edges (6); round woven structure laid flat to form seam loops (5) at its edges; a spirally wound structure produced by spirally winding narrow tape material in an overlapping or butted manner and laid flat to form seam loops (5) at its ends; spirally laid thread scrim with fibre fleece laid flat to form seam loops (5); a spiral structure of interlockingly laid plastic spirals joined by means of plug wires to form a sheet-like structure, edge spirals forming seam loops (5).

15. A fabric according to any one of claims 12 to 14, **characterised in that** one or more functional layers are arranged on the base structure (3) and/or on the at least one staple fibre layer and/or between staple fibre layers and/or on the uppermost staple fibre layer as a cover layer.

## Revendications

1. Procédé de fabrication d'une toile, en particulier pour une utilisation dans une section de presse d'une machine de fabrication d'une bande fibreuse telle qu'une bande de papier, de carton ou de papier tissu, comprenant les étapes de procédé suivantes : i) fabrication d'une structure de base (3) d'une largeur quelconque ; la structure de base (3) présentant des bords avec des boucles de couture latérales ii) conversion de la structure de base en produit en rouleau ; iii) application d'au moins une couche de fibres discontinues et aiguilletage avec la structure de base (3) ; iv) confectionner le produit en rouleau en bandes (2) ; v) tourner les bandes de 90° de sorte que les bords avec des boucles de couture latérales soient orientés dans une direction de machine transversale de l'entoilage ; et vi) assembler les bandes (2) en un entoilage (1), l'assemblage pouvant être réalisé en particulier au moyen de fils de connexion.

2. Procédé selon la revendication 1, **caractérisé en ce que** l'étape i) du procédé comprend en outre une étape subséquente de thermofixation.

3. Procédé selon la revendication 1 ou 2, **caractérisé en ce que** l'étape de procédé ii) présente les étapes partielles suivantes : a) fermeture de boucles de couture latérales de la structure de base (3) en fixant à chaque fois une bande de tissu supplémentaire ; b) enroulement de la structure de base (3) munie des bandes de tissu supplémentaires.

4. Procédé selon l'une quelconque des revendications 1 à 3, **caractérisé en ce que** l'étape ii) du procédé comprend en outre une étape subséquente de thermofixation.

5. Procédé selon l'une des revendications 1 à 4, **caractérisé en ce que** l'étape de procédé iii) comprend les étapes partielles suivantes : a) application d'une ou de plusieurs couches de fibres discontinues avec des diamètres de fibres et des grammages différents en une ou plusieurs étapes sur le produit en rouleau ; b) fixation de la couche de fibres discontinues sur la structure de base par aiguilletage ; c) le cas échéant, répétition de l'étape b).

6. Procédé selon la revendication 5, **caractérisé en ce qu'**une densité d'aiguilletage d'environ 500 à 1500 points par cm² est prévue.

7. Procédé selon l'une quelconque des revendications 1 à 5, **caractérisé en ce que** l'étape iii) du procédé comprend en outre la mise en place d'une ou plusieurs couches fonctionnelles.

8. Procédé selon l'une quelconque des revendications 1 à 6, **caractérisé en ce que** l'étape iii) du procédé comprend en outre une étape ultérieure de thermofixation.

9. Procédé selon l'une quelconque des revendications 1 à 8, **caractérisé en ce que** l'étape iv) du procédé comprend les sous-étapes suivantes : a) couper le tissu en rouleau en fonction de la largeur souhaitée de l'entoilage (1) ; b) fendre les couches de fibres discontinues pour réaliser des rabats de couture sur les bords ; c) ouvrir les coutures entre la structure de base et les bandes de tissu supplémentaires en retirant le fil de connexion ; d) séparer les bandes (2) les unes des autres.

10. Procédé selon l'une quelconque des revendications 1 à 9, **caractérisé en ce que** l'étape v) du procédé comprend en outre une étape ultérieure de thermofixation.

11. Procédé selon l'une quelconque des revendications 1 à 10, **caractérisé en ce qu'**un matériau thermoplastique ou une colle, en particulier une résine époxyde ou acrylique à deux composants, sont introduits pour créer une liaison adhésive dans la zone de soudure.

12. Entoilage (1) destiné notamment à être utilisé dans une section de presse d'une machine de fabrication d'une nappe fibreuse telle qu'une nappe de papier, de carton ou de papier tissu, comprenant une structure de base (3) et au moins une couche de fibres discontinues disposée sur la structure de base (3) et liée à celle-ci, **caractérisé en ce que** la fabrication de l'entoilage (1) comprend un procédé selon l'une des revendications 1 à 11.

13. Entoilage selon la revendication 12, **caractérisé en ce qu'**il est prévu plusieurs couches de fibres discontinues qui présentent des grammages différents et/ou des épaisseurs de fibres différentes.

14. Habillage selon l'une des revendications 12 ou 13, **caractérisé en ce que** la structure de base (3) est choisie parmi : structure tissée à plat avec des boucles de couture tissées (5) sur les bords (6) ; structure tissée à plat réunie en une bande sans fin et aplatie pour former des boucles de couture (5) sur ses bords (6) ; structure tissée circulaire aplatie pour former des boucles de couture (5) sur ses bords ; Structure enroulée en spirale, obtenue par enroulement en spirale de bandes étroites se chevauchant ou se rejoignant, et aplatie pour former des boucles de couture (5) à ses extrémités ; tissu non tissé en spirale, aplati pour former des boucles de couture (5) ; structure en spirale constituée de spirales en matière plastique, déposées de manière à s'emboîter les unes dans les autres et reliées par des fils de connexion pour former une structure plane, les spirales situées sur les bords formant des boucles de couture (5).

15. Entoilage selon l'une des revendications 12 à 14, **caractérisé en ce qu'**une ou plusieurs couches fonctionnelles sont disposées sur la structure de base (3) et/ou sur la au moins une couche de fibres discontinues et/ou entre des couches de fibres discontinues et/ou sur la couche de fibres discontinues supérieure en tant que couche de couverture.
